**Europäisches Patentamt**

**European Patent Office**

**Office européen des brevets**

(19)

(11) Veröffentlichungsnummer: **0 193 967
B1**

(12) # EUROPÄISCHE PATENTSCHRIFT

(45) Veröffentlichungstag der Patentschrift:
07.06.89

(21) Anmeldenummer: 86103038.5

(22) Anmeldetag: 07.03.86

(51) Int. Cl.⁴: **H04Q 11/04,** H04M 3/24,
H04Q 1/24

(54) Verfahren zur Durchschalteprüfung einer Breitband-Koppeleinrichtung.

(30) Priorität: 08.03.85 DE 3508358

(43) Veröffentlichungstag der Anmeldung:
10.09.86 Patentblatt 86/37

(45) Bekanntmachung des Hinweises auf die Patenterteilung:
07.06.89 Patentblatt 89/23

(84) Benannte Vertragsstaaten:
AT BE CH DE FR GB IT LI NL SE

(56) Entgegenhaltungen:
EP-A- 0 163 288
FR-A- 2 252 711
FR-A- 2 252 718
FR-A- 2 509 944

INTERNATIONAL SWITCHING SYMPOSIUM, 7.-11.
Mai 1984, Session 32C, Paper 3; Seiten 1-5, Florenz, IT;
CHARDON et al.: "A picturephone broadband switching
network"
INTERNATIONAL SWITCHING SYMPOSIUM, 21.-25.
September 1981, Session 21B, Paper 5, Seiten 1-7,
Montreal, CA; CARDWELL et al.: "Experimental
wideband switching system capability"

(73) Patentinhaber: **Siemens Aktiengesellschaft Berlin und
München, Wittelsbacherplatz 2, D-8000 München 2(DE)**

(72) Erfinder: **Appelmann, Wolfgang, Dipl.-Ing.,
Ringstrasse 1, D-8000 München 70(DE)**
Erfinder: **Thoma, Wolfgang, Dr.-Ing., Rueppstrasse 34,
D-8000 München 71(DE)**

(56) Entgegenhaltungen: (Fortsetzung)
**PATENTS ABSTRACTS OF JAPAN, Band 8,
Nr. 74 (E-236) [1511], 6. April 1984, Seite 47 E 236; & JP -
A - 58 221 553
PATENTS ABSTRACTS OF JAPAN, Band 8, Nr. 74, 6.
April 1984, Seite 1511 E 236; & JP - A - 58 221 553
COMMUTATION & ELECTRONIQUE, Nr. 57, April 1977,
Seiten 29-34, Issy-les-Moulineaux, FR; J.P. LAGER:
"Techniques de détection d'incidents dans un centre
de transit temporel"**

## Beschreibung

In Fernmeldevermittlungsanlagen besteht neben deren Hauptaufgabe, Leitungsanschlüsse für einen exklusiven Nachrichtenaustausch zeitweilig miteinander zu verbinden, zugleich die Nebenaufgabe, fehlerhafte Verbindungen, insbesondere zwischen zwei bereits miteinander verbundenen Leitungsanschlüssen und einem dritten Leitungsanschluß (sog. Doppelverbindungen), zu vermeiden. Insbesondere in Breitband-Koppeleinrichtungen für Bildkommunikation kennt man außer steuerungsfehlerbedingten Fehlverbindungen auch Fehlverbindungen, die durch Nebensprecheffekte hervorgerufen werden. Nachdem solche Fehlverbindungen sporadisch auftreten können, müssen sie, um nachteilige Störungen vermeiden zu können, sehr schnell erkannt werden.

Um Fehlverbindungen in Vermittlungsanlagen festzustellen, unterzieht man deren Koppeleinrichtungen sogenannten Durchschalteprüfungen.

So hat man zur Durchschalteprüfung einer Breitband-Koppeleinrichtung, über die Bildfernsprechsignale durchgeschaltet werden, vorgesehen, daß jeweils nach einer Verbindungsdurchschaltung bei dem jeweils einen an der betreffenden Verbindung beteiligten Leitungsanschluß der Koppeleinrichtung ein Pilotsignal eingespeist wird und dann geprüft wird, ob dieses Pilotsignal nur zu dem jeweils anderen an der betreffenden Verbindung beteiligten Leitungsanschluß der Koppeleinrichtung (und zu keinem weiteren Anschluß) gelangt. Auf diese Art und Weise ist es an sich möglich, jede neu geschaltete Verbindung auf Durchschaltung und Doppelverbindung zu überprüfen; das Verfahren führt indessen wegen der jeweils erforderlichen Abfrage aller Leitungsanschlüsse schnell zu relativ großen Rechnerbelastungen und Verarbeitungszeiten, so daß es nur für sehr kleine Vermittlungsanlagen praktikabel ist.

Es ist auch schon vorgeschlagen worden (siehe EP-A-0 163 288, veröffentlicht am 04.12.85), zur Durchschalteprüfung einer Raummultiplex-Koppeleinrichtung durch verbindungsindividuelles eingangsseitiges Einspeisen und ausgangsseitiges Auswerten einer Prüfinformation in der Weise zu verfahren,

daß die Prüfinformation jeweils eine den für die betreffende Verbindung benutzten Eingang der Koppeleinrichtung kennzeichnende Absenderadresse sowie eine den zu benutzenden Ausgang der Koppeleinrichtung kennzeichnende Zieladresse umfaßt und empfangsseitig mit den durch diese Adressen gebildeten Verbindungsdaten verglichen wird, wobei in einem Fernmeldesystem, bei dem auf den durch die Raummultiplex-Koppeleinrichtung zu verbindenden Leitungen in periodisch sich wiederholenden Zeitspannen außer der durchzuschaltenden Nutzinformation auch der Signalisierung, Steuerung und Synchronisierung dienende Betriebsinformationen übertragen werden,

entweder die Prüfinformationen nur während des Verbindungsaufbaues in den für die Nutzinformationen vorgesehenen Zeitspannen übertragen werden und empfangsseitig einmalig ein Vergleich mit den gespeicherten Einstellinformationen vorgenommen wird

oder aber die Prüfinformation während der gesamten Dauer einer Verbindung anstelle einer der Betriebsinformationen, die eingangs der Raummultiplex-Koppeleinrichtung ausgeblendet und ggfs. ausgangs der Raummultiplex-Koppeleinrichtung wieder zugeführt werden, in den für diese Betriebsinformationen vorgesehenen Zeitspannen über die Raummultiplex-Koppeleinrichtung übertragen werden und empfangsseitig periodisch ein Vergleich mit den gespeicherten Einstellinformationen vorgenommen wird;

der dabei jeweils mit einer der betreffenden Ausgangsleitung individuell zugeordneten Einrichtung vorgenommene empfangsseitige Vergleich bedingt eine entsprechende empfangsseitige Verfügbarkeit der Verbindungsadressen.

Die Erfindung stellt sich nun die Aufgabe, ein Verfahren zur Durchschalteprüfung einer Breitband-Koppeleinrichtung anzugeben, das beim eigentlichen Prüfvorgang nicht auf ein Mitwirken übergeordneter Einrichtungen angewiesen ist.

Die Erfindung betrifft ein Verfahren zur Durchschalteprüfung einer Breitband-Koppeleinrichtung unter verbindungsindividuellem eingangsseitigen Einspeisen und ausgangsseitigen Auswerten eines eine den Koppeleinrichtungs-Eingang bezeichnende Adresse enthaltenden Prüfsignals; dieses Verfahren ist erfindungsgemäß dadurch gekennzeichnet, daß in einem diensteintegrierenden Telekommunikationssystem mit getrennten Koppeleinrichtungen für Schmalband- und für Breitbanddienste in jeder an einer Breitbandverbindung beteiligten Anschlußleitung Durchschalteprüfsignale, die jeweils die Adresse eben dieser Anschlußschaltung sowie die in von der Gegenseite her empfangenen entsprechenden Durchschalteprüfsignalen etwa enthaltene Adresse der Gegen-Anschlußschaltung enthalten, in die Schmalbandsignallücken des Breitbandsignals eingefügt werden und von jeder Anschlußschaltung die Breitbandsignalübertragung über die zugehörige Anschlußleitung für zumindest eine Übertragungsrichtung nur bei Empfang eines die eigene Adresse enthaltenden Durchschalteprüfsignals freigegeben wird.

Diese Durchschalteprüfung ermöglicht es, bereits individuell von einem jeweils betroffenen Leitungsanschluß her ohne Mitwirkung übergeordneter Einrichtungen fehlerhafterweise nur in einer Richtung zustande kommende Verbindungen und (insbes. nebensprechbedingte) Doppelverbindungen rechtzeitig erkennen zu können, so daß sie gar nicht erst wirksam werden.

In weiterer Ausgestaltung der Erfindung können die über die Breitband-Koppeleinrichtung durchvermittelten Digitalsignale einzeln auch an einen ebenfalls an die Breitband-Koppeleinrichtung angeschlossenen Prüfanschluß angeschaltet werden. Ein solcher Prüfanschluß, der sich zyklisch oder auch von Fall zu Fall gezielt an die einzelnen Leitungsanschlüsse anschalten kann, kann dem Digitalsignal die darin enthaltenen Durchschalteprüfsignale entnehmen und an den zugehörigen Vermittlungsprozessor weiterleiten, der damit die Richtigkeit der bestehenden Verbindung prüfen kann (siehe auch EP-A 0 198 203 mit dem gleichen Prioritätsdatum).

Dabei können in weiterer Ausgestaltung der Erfindung mit den Durchschalteprüfsignalen zusätzliche Meldebits zum Prüfanschluß übertragen werden, die der Prüfanschluß dann auswerten und zum Vermittlungsprozessor weiterleiten kann. Alternativ dazu ist es aber auch möglich, daß von den Anschlußschaltungen selbst über gesonderte Meldesignalverbindungen Meldebits zu dem übergeordneten Vermittlungsprozessor übertragen werden, womit dieser wiederum entsprechende Zusatzinformationen erhalten kann.

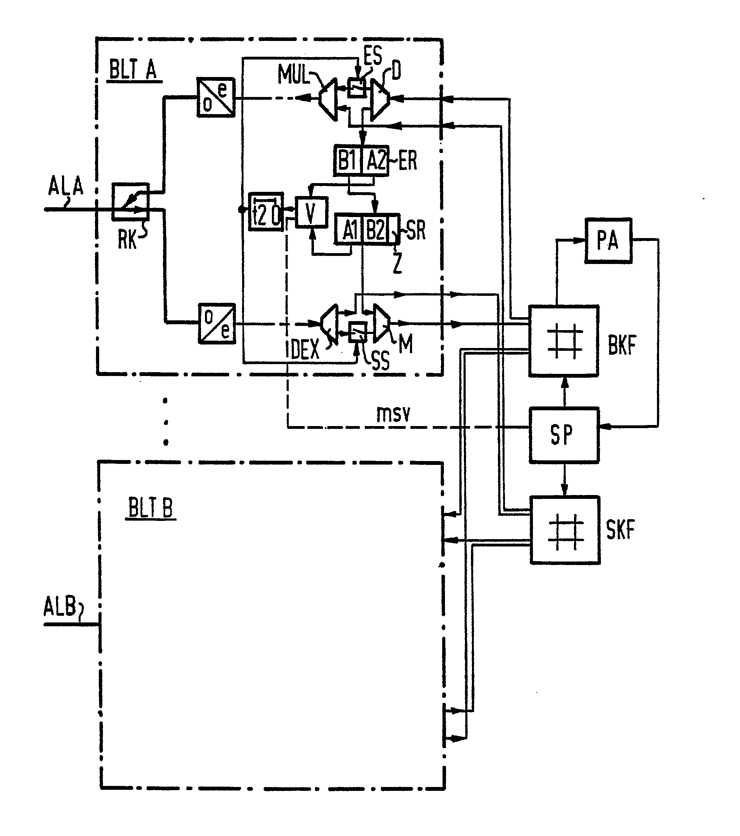

Weitere Besonderheiten der Erfindung werden aus deren nachfolgender näherer Erläuterung an Hand der Zeichnung ersichtlich.

In der Zeichnung ist schematisch in einem zum Verständnis der Erfindung erforderlichen Umfang ein Ausführungsbeispiel eines diensteintegrierenden Telekommunikationssystems mit einer von einem Vermittlungsprozessor SP gesteuerten Schmalbandkoppeleinrichtung SKF und einer gesonderten, vorzugsweise von demselben Vermittlungsprozessor SP gesteuerten Breitbandkoppeleinrichtung BKF dargestellt, an die zu Teilnehmerstationen oder auch zu anderen Vermittlungseinrichtungen führende Lichtwellenleiter-Anschlußleitungen AL A,...,AL B jeweils über eine Anschlußschaltung BLT A,...,BLT B angeschlossen sind. Aus der die Anschlußschaltung BLT A näher in schaltungstechnischen Einzelheiten zeigenden Zeichnung wird dabei ersichtlich, daß die - dann einfaserige - Lichtwellenleiter-Anschlußleitung AL in der Anschlußschaltung BLT über einen Lichtwellenleiter-Richtungskoppler RK mit dem Ausgang eines elektro/optischen Wandlers e/o und mit dem Eingang eines opto/elektrischen Wandlers o/e verbunden sein kann. Mit dem Eingang des elektro/optischen Wandlers e/o ist der Ausgang eines Multiplexers MUL verbunden, der über die Schmalbandkoppeleinrichtung SKF durchvermittelte Schmalband-Digitalsignale (z.B. 64-kbit/-Fernsprechsignale) und über die Breitbandkoppeleinrichtung BKF durchvermittelte Breitbandsignale (Bildfernsprechsignale) sowie (z.B. 8-kbit/s-)Steuersignale und Synchronisiersignale zu einem über die Lichtwellenleiter-Anschlußleitung AL zu übertragenden Multiplexsignal, beispielsweise einem 140-Mbit/s- oder 34-Mbit/s-Zeitmultiplexsignal, zusammenfaßt. Ein in der umgekehrten Übertragungsrichtung über die Lichtwellenleiter-Anschlußleitung AL übertragenes Multiplexsignal, insbesondere Zeitmultiplexsignal, wird in einem dem opto/elektrischen Wandler o/e nachgeschalteten Demultiplexer DEX in die entsprechenden Einzelsignale, beispielsweise in (z.B. 8-kbit/s-)Steuersignale, Synchronisiersignale, über die Schmalbandkoppeleinrichtung SKF durchzuvermittelnde (z.B. 64-kbit/s-Fernsprech-)Schmalband-Digitalsignale und ein über die Breitbandkoppeleinrichtung BKF durchzuschaltendes Breitbandsignal (Bildfernsprechsignal), aufgefächert.

In die bei dieser Auffächerung entstehenden Schmalbandsignallücken des Breitbandsignals werden nun in jeder an einer Breitbandverbindung beteiligten Anschlußschaltung BLT während der ganzen Verbindungsdauer Durchschalteprüfsignale eingefügt, die jeweils die Adresse eben dieser Anschlußschaltung BLT sowie ggf. die in von der Gegenseite her über die Breitbandkoppeleinrichtung BKF empfangenen entsprechenden Durchschalteprüfsignalen etwa enthaltene Adresse einer Gegen-Anschlußschaltung enthalten. Wie aus der Zeichnung ersichtlich wird, kann dazu in jeder Anschlußschaltung BLT ein Senderegister SR vorgesehen sein, in dessen ersten Registerteil A1 ständig die Adresse eben dieser Anschlußschaltung stehen möge und in dessen zweiten Registerteil B2 ggf. die empfangene Adresse einer Gegen-Anschlußschaltung eingegeben wird; ausgangsseitig führt das Senderegister SR zu einem entsprechenden Eingang eines Multiplexers M, der zwischen den Demultiplexer DEX und die Breitbandkoppeleinrichtung BKF eingefügt ist, so daß er das vom Senderegister SR jeweils abgegebene Durchschalteprüfsignal in eine Schmalbandsignallücke des Breitbandsignals einfügt.

Es sei hier bemerkt, daß die Erfindung auch dann Anwendung finden kann, wenn auf der Anschlußleitung AL kein Schmalbandsignal übertragen wird und die entsprechende Übertragungskapazität auf der Anschlußleitung ungenutzt bleibt.

Im umgekehrt gerichteten Signalweg ist zwischen die Breitbandkoppeleinrichtung BKF und den Multiplexer MUL ein Demultiplexer D eingefügt, der solche von einer mit der gerade betrachteten Anschlußleitung BLT A über die Breitbandkoppeleinrichtung BKF gerade verbundenen anderen Anschlußschaltung in das Breitbandsignal eingefügte Durchschalteprüfsignale ausblendet und einem Empfangsregister ER zuführt. Dessen erster Registerteil B1, der ggf. die in einem solchen Durchschalteprüfsignal enthaltene Adresse einer mit der gerade betrachteten Anschlußschaltung BLT A über die Breitbandkoppeleinrichtung BKF gerade verbundenen Gegen-Anschlußschaltung, beispielsweise der in gleicher Weise aufgebauten Anschlußschaltung BLT B, aufnimmt, ist mit dem Senderegisterteil B2 verbunden, so daß die in der Anschlußschaltung BLT A empfangenen Durchschalteprüfsignalen enthaltene Adresse der Gegen-Anschlußschaltung (BLT B) in diesen Senderegisterteil B2 gelangt und dann, wie schon erwähnt, in den nachfolgend von der gerade betrachteten Anschlußschaltung BLT A abzugebenden Durchschalteprüfsignalen an die Adresse eben dieser Anschlußschaltung BLT A angefügt und damit zur Gegen-Anschlußschaltung (BLT B) zurückübertragen wird.

In entsprechender Weise wird, ohne daß dies in der Zeichnung noch näher verdeutlicht ist, in der im Beispiel gerade mit der Anschlußschaltung BLT A über die Breitbandkoppeleinrichtung BKF verbundenen Anschlußschaltung BLT B die in den dort von der Anschlußschaltung BLT A her empfangenen Durchschalteprüfsignalen enthaltene Adresse der Anschlußschaltung BLT A in den von der Anschlußschaltung BLT B ausgesendeten Durchschalteprüfsignalen gewissermaßen reflektiert. Die reflektierte Adresse gelangt dann bei Empfang dieser Durchschaltesignale in der Anschlußschaltung BLT A in deren Empfangsregisterteil A2.

In jeder Anschlußschaltung BLT wird nun die Breitbandsignalübertragung über die zugehörige Anschlußleitung AL für zumindest eine Übertragungsrichtung nur bei Empfang eines die eigene Adresse enthaltenden Durchschalteprüfsignals freigegeben. In der Zeichnung ist dazu angedeutet, daß ein Vergleicher V jeweils die im Senderegisterteil A1 stehende Adresse der gerade betrachteten Anschlußschaltung (BLT A) mit dem etwaigen Inhalt des Empfangsregisterteils A2 vergleicht und bei Übereinstimmung ein die Breitbandsignalübertragung freigebendes Entriegelungssignal abgibt. Dabei kann es genügen, nur die Signalübertragung in Richtung von der Anschlußschaltung BLT weg über die Lichtwellenleiter-Anschlußleitung AL von dem Vergleichsergebnis abhängig zu machen, um ein Mithören bzw. Mitsehen eines mit der Lichtwellenleiter-Anschlußleitung AL direkt oder über weitere Koppeleinrichtungen verbundenen, ungewollt bzw. unbefugt in eine andere Verbindung eingekoppelten Terminals zu vermeiden. In der Zeichnung ist demgegenüber angedeutet, daß -, während Schmalbandsignale (wie 64-kbit/s-Fernsprechsignale, 8-kbit/s-Steuersignale Synchronisierungssignale) und die Durchschalteprüfsignale ungehindert während der ganzen Verbindungsdauer übertragen werden, - vom Ausgang des Vergleichers V her über entsprechende Schalteinrichtungen ES, SS sowohl die Breitbandsignalübertragung vom Demultiplexer D zum Multiplexer MUL als auch die Breitbandsignalübertragung vom Demultiplexer DEX zum Multiplexer M nur bei Empfang von die eigene Adresse enthaltenden Durchschalteprüfsignalen freigegeben wird. Dabei wird, wie dies auch in der Zeichnung angedeutet ist, der Vergleicher V zweckmäßigerweise mit einer Abfallverzögerung versehen, so daß die Breitbandsignalübertragung bei einem Wegfall eines die eigene Adresse enthaltenden Durchschalteprüfsignals für eine Verzögerungszeitspanne t2 beibehalten bleibt und somit Einzelfehler bei der Übertragung der Durchschalteprüfsignale nicht zu einer Verbindungsunterbrechung bzw. -auslösung führen.

Mit der beschriebenen Durchschalteprüfung können alle Fehlverbindungen in Form von nur in einer Übertragungsrichtung bestehenden Verbindungen oder von (nebensprechbedingten) Doppelverbindungen erfaßt und unwirksam gemacht werden, und zwar ohne Mitwirkung übergeordneter Einrichtungen. Zusätzlich können die dazu verwendeten Durchschalteprüfsignale aber auch an einen Prüfanschluß PA angeschaltet werden, der, wie dies in der Zeichnung angedeutet ist, ebenfalls an die Breitbandkoppeleinrichtung BKF angeschlossen ist und der in der Breitbandkoppeleinrichtung BKF, vom Vermittlungsprozessor SP gesteuert, zyklisch oder auch von Fall zu Fall gezielt auf bestehende Verbindungen aufgeschaltet oder auch an einzelne Leitungsanschlüsse BLT angeschaltet werden möge. Dieser Prüfanschluß PA kann dann die empfangenen Durchschalteprüfsignale an den Vermittlungsprozessor SP weiterleiten, so daß dieser anhand der jeweiligen Einstellung der Breitbandkoppeleinrichtung BKF Fehlverbindungen und insbesondere etwaige Fehleinstellungen der Breitbandkoppeleinrichtung BKF auch lokalisieren kann.

Dabei können von den Leitungsanschlüssen BLT mit deren Durchschalteprüfsignalen auch zusätzliche Meldebits zum Prüfanschluß PA hin übertragen werden, die dann ebenfalls im Prüfanschluß PA ausgewertet bzw. an den Vermittlungsprozessor SP weitergeleitet werden können. In der Zeichnung ist dazu angedeutet, daß das in jeder Anschlußschaltung (BLT A) vorgesehene Senderegister SR einen zusätzlichen Registerplatz Z aufweist, so daß auch darin stehende Meldebits mit dem jeweiligen Durchschalteprüfwort vom Multiplexer M in die Schmalbandsignallücken des Breitbandsignals eingefügt werden. Solche Meldebits können z.B. einen Ausfall der Lichtwellenleiter-Anschlußleitung (AL), eine erhöhte Bitfehlerhäufigkeit des auf der Lichtwellenleiter-Anschlußleitung (AL) übertragenen Signals und/oder des von der Breitbandkoppeleinrichtung BKF durchgeschalteten Signals oder auch die Abgabe des Freigabesignals durch den Vergleicher V anzeigen, womit im letzteren Fall auch dem Vermittlungsprozessor SP die Fehlerfreiheit der betreffenden Verbindung positiv angezeigt wird.

Alternativ dazu können solche Meldebits von den Leitungsabschlüssen BLT aber auch über gesonderte Meldesignalverbindungen zu dem Vermittlungsprozessor SP hin übertragen werden. Eine solche beispielsweise vom Vergleicher V ausgehende Meldesignalverbindung ist in der Zeichnung mit msv bezeichnet.

**Patentansprüche**

1. Verfahren zur Durchschalteprüfung einer BreitbandKoppeleinrichtung unter verbindungsindividuellem eingangsseitigen Einspeisen und ausgangsseitigen Auswerten eines eine den Koppeleinrichtungs-Eingang bezeichnende Adresse enthaltenden Prüfsignals,
**dadurch gekennzeichnet,**
daß in einem diensteintegrierenden Telekommunikationssystem mit getrennten Koppeleinrichtungen (SKF, BKF) für Schmalband- und für Breitbanddienste in jeder an einer Breitbandverbindung beteiligten Anschlußschaltung (BLT) Durchschalteprüfsignale, die jeweils die Adresse eben dieser Anschlußschaltung (BLT A) sowie die in von der Gegenseite her empfangenen entsprechenden Durchschalteprüfsignalen etwa enthaltene Adresse der Gegen-Anschlußschaltung (BLT B) enthalten, in die Schmalbandsignallücken des Breitbandsignals eingefügt werden und von jeder Anschlußschaltung (BLT) die Breitbandsignalübertragung über die zugehörige Anschlußleitung (AL) für zumindest eine Übertragungsrichtung nur bei Empfang eines die eigene Adresse enthaltenden Durchschalteprüfsignals freigegeben wird.

2. Verfahren nach Anspruch 1,
**dadurch gekennzeichnet,**
daß die Breitbandsignalübertragung über die Anschlußleitung (AL) für beide Übertragungsrichtungen nur bei Empfang eines die eigene Adresse enthaltenden Durchschalteprüfsignals freigegeben ist.

3. Verfahren nach Anspruch 1 oder 2,
**dadurch gekennzeichnet,**
daß die Breitbandsignalübertragung bei einem Wegfall des die eigene Adresse enthaltenden Durchschalteprüfsignals für eine Verzögerungszeitspanne weiter freigegeben bleibt.

4. Verfahren nach einem der Ansprüche 1 bis 3,
**dadurch gekennzeichnet,** daß die Durchschalteprüfsignale zusätzlich an einen ebenfalls an die Breitband-Koppeleinrichtung (BKF) angeschlossenen Prüfanschluß (PA) angeschaltet werden.

5. Verfahren nach Anspruch 4,
**dadurch gekennzeichnet,**
daß mit den Durchschalteprüfsignalen zusätzliche Meldebits zum Prüfanschluß (PA) übertragen werden.

6. Verfahren nach einem der Ansprüche 1 bis 3,
**dadurch gekennzeichnet,**
daß von den Anschlußschaltungen (BLT) über eine gesonderte Meldesignalverbindung (msv) Meldebits zu einem übergeordneten Vermittlungsprozessor (SP) übertragen werden.

## Claims

1. Method for connection-testing of a broadband switching network with a connection-individual, input-end feeding-in of a test signal containing an adress designating the switching network input, and output-end evaluating thereof, characterized in that in an integrated services telecommunication system separate switching networks (SKF, BKF) for narrow-band and for broad-band services in each access circuit (BLT) involved in a broad-band connection test signals which in each case contain the address of just this access circuit (BLT A) and the address of the distant access circuit (BLT B) which may be contained in corresponding connection test signals received from the distant station are inserted into the narrow-band signal gaps of the broad-band signal and broad-band signal transmission via the associated access line (AL) for at least one transmission direction is released by each access circuit (BLT) only if a connection test signal containing the own address is received.

2. Method according to Claim 1, characterized in that the broad-band signal transmission via the access line (AL) is released for both directions of transmission only when a connection test signal containing the own address is received.

3. Method according to Claim 1 or 2, characterized in that the broad-band signal transmission still remains released for a period of delay when the connection test signal containing the own address drops out.

4. Method according to one of Claims 1 to 3, characterized in that the connection test signals are additionally connected to a test connection (PA) which is also connected to the broad-band switching network (BKF).

5. Method according to Claim 4, characterized in that with the connection test signals additional signalling bits are transmitted to the test connection (PA).

6. Method according to one of Claims 1 to 3, characterized in that signalling bits are transmitted from the access circuits (BLT) via a separate signalling connection (msv) to a higher-level exchange processor (SP).

## Revendications

1. Procédé de contrôle d'interconnexion dans un dispositif de couplage à large bande au moyen de l'injection côté entrée et de l'évaluation côté sortie, d'une manière prévue individuellement pour chaque liaison, d'un signal de contrôle contenant une adresse caractérisant l'entrée du dispositif de couplage, caractérisé par le fait que dans ce système de télécommunications à intégration des services, comportant des dispositifs de couplage séparés (SKF, BKF) pour des services à bande étroite et pour des services à large bande, dans chaque circuit de raccordement (BLT) participant à une liaison à large bande, on insère, dans les intervalles vides à bande étroite du signal à large bande, des signaux de contrôle d'interconnexion qui contiennent respectivement l'adresse précisément de ce circuit de raccordement (BLT A) ainsi que l'adresse du ciruit de raccordement opposé (BLT B), contenue éventuellement dans des signaux de contrôle d'interconnexion correspondants, reçus en provenance du côté opposé et la transmission du signal à large bande par l'intermédiaire de la ligne associée de raccordement (AL) pour au moins un sens de transmission est libérée, par chaque circuit de raccordement (BLT), uniquement lors de la réception d'un signal de contrôle d'interconnexion contenant l'adresse particulière.

2. Procédé suivant la revendication 1, caractérisé par le fait que la transmission du signal à large bande par l'intermédiaire de la ligne de raccordement (AL) pour les deux sens de transmission est libérée uniquement lors de la réception d'un signal de contrôle d'interconnexion contenant l'adresse particulière.

3. Procédé suivant la revendication 1 ou 2, caractérisé par le fait que, dans le cas de l'absence du signal de contrôle d'interconnexion contenant l'adresse particulière, la transmission du signal à large bande continue à être libérée pendant un certain intervalle de temps de retard.

4. Procédé suivant l'une des revendications 1 à 3, caractérisé par le fait que les signaux de contrôle d'interconnexion sont en outre appliqués à une borne de contrôle (PA) également raccordée au dispositif de couplage à large bande (BKF).

5. Procédé suivant la revendication 4, caractérisé par le fait que des bits supplémentaires de signalisation sont transmis, conjointement avec les signaux de contrôle d'interconnexion, à la borne de contrôle (PA).

6. Procédé suivant l'une des revendications 1 à 3, caractérisé par le fait que des bits de signalisation sont transmis par les circuits de raccordement (BLT), par l'intermédiaire d'une liaison particulière (msv) de transmission de signaux de signalisation, à un processeur de commutation de rang supérieur (SP).